# EUROPÄISCHE PATENTSCHRIFT

(11) **EP 0 690 818 B1**
(45) Veröffentlichungstag und Bekanntmachung des Hinweises auf die Patenterteilung: **16.04.1997**
(21) Anmeldenummer: 94912504.1
(22) Anmeldetag: 23.03.1994
(51) Int. Cl.: B65G 67/60

(54) **SCHIFFSBE- UND/ODER -ENTLADER**
SHIP-LOADING AND/OR UNLOADING SYSTEM
DISPOSITIF DE CHARGEMENT ET/OU DE DECHARGEMENT POUR BATEAUX

(30) Priorität: 03.04.1993 DE 4311074
(43) Veröffentlichungstag der Anmeldung: 10.01.1996
(73) Patentinhaber: Krupp Fördertechnik GmbH, 45143 Essen (DE)
(72) Erfinder: PHILIPP, Klaus, D-66424 Homburg (DE); ROOS, Hans, D-66386 St. Ingbert (DE); ROMMELFANGER, Bert, D-66113 Saarbrücken (DE)
(86) Internationale Anmeldenummer: EP9400904
(87) Internationale Veröffentlichungsnummer: WO9422752

(56) Entgegenhaltungen:
- DE-A- 2 153 359
- DE-A- 2 516 943
- DE-C- 903 678

## Beschreibung

Die Erfindund betrifft einen Schiffsbe- und/oder entlader mit einer, eine Fördereinrichtung beinhaltenden, mit einem verfahrbaren Ausleger zusammenwirkenden Brücke, die schiffsseitig durch eine, im wesentlichen parallel zum Schiff auf einer geraden Fahrbahn verfahrbaren Fahrwerksstütze abgestützt ist, wobei die Brücke um eine Vertikalachse der Fahrwerksstütze schwenkbar ist und die landseitig auf einer ortsfesten Stütze relativ zur ortsfesten Stütze in Längsrichtung der Brücke verschiebbar aufsitzt und um eine vertikale Achse der ortsfesten Brücke schwenkbar ist, wobei die Brücke in ihrer Betriebsstellung über ein auf der vertikalen Achse liegendes, allseitig drehbares Lager auf der ortsfesten Stütze aufsitzt.

Eine solche Schiffsbe- und Entladeeinrichtung ist durch die DE-B-21 53 359 bekannt. Die DE-B-21 53 359 betrifft eine Be- und Entladebrücke für sich im wesentlichen quer zu dieser erstreckenden Laderäume, insbesondere für an einem Pier längsseitig liegende Schiffe, mit einem eine Fördereinrichtung tragenden Brückenrahmen mit einem vorderen, dem Laderaum benachbarten und einem hinteren, dem Laderaum abgewandten Ende, mit einer am vorderen Ende längsverschiebbar geführten Ladegutübergabeeinrichtung zwischen Laderaum und Ladebrücke, mit einem den Brückenrahmen am Ende abstützenden, auf Schienen verlaufenden vorderen Stützlager, das als einfacher Schwenkanschluß ausgebildet ist, und mit einem um eine vertikale Achse relativ zum Brückenrahmen schwenkbaren hinteren Stützlager, welches auch in der Außerbetriebsstellung immmer belastet ist und daher auch in dieser Stellung einem gewissen Verschleiß unterliegt, am hinteren Ende des Brükkenrahmens. Das vordere Stützlager ist parallel zur Längsachse des Laderaumes geführt, mittels einer Antriebsvorrichtung verfahrbar und um eine im wesentlichen vertikale Achse gegenüber dem Brückenrahmen schwenkbar. Das hintere Stützlager ist so ausgebildet, daß eine Verschiebung des Brückenrahmens in dessen Längsrichtung ermöglicht wird. Die geradlinige Führung weist ein sich längs des Laderaumes erstreckendes Schienenpaar zur Aufnahme eines Portals auf, die auf gegenüber dem für den Laderaum vorgesehenen Platz fest angeordneten Dalben starr befestigt sind. Die Fahrbahn wird hierbei erheblichen horizontalen Lasten ausgesetzt, da im Hinblick auf die ständigen Bewegungen an der rückseitigen Drehachse Horizontalkräfte nur in einer ganz bestimmten Richtung aufgenommen werden können.

Bei dieser herkömmlichen Bauart mit auf der Fahrwerksstütze gelenkig aufgelagertem Brückenrahmen besteht die Fahrbahn, wie bereits dargelegt, aus zwei parallel zueinander verlaufenden Schienen, die unter entsprechendem Platzbedarf soweit gespreizt sind, daß die Momente aus den Horizontallasten quer zur Schiene standsicher aufgenommen werden. Oft sind dabei zusätzliche Gewichte erforderlich. Diese Fahrbahn mit Doppelschiene bringt erhebliche Kosten mit sich, besonders bei hohen Fahrwerksstützen und widrigen Gründungsverhältnissen. Hinzu kommt, daß bei einer Vierpunkt-Lagerung der Fahrwerksstützen Zwängungskräfte entstehen durch Schienentoleranzen und eventuelle Fahrbahnsetzungen.

Die DE-C-25 16 943 betrifft einen Schiffsbelader zum umweltfreundlichen Verladen, insbesondere staubender Schüttgüter, mit einer Zentralsäule und einer um diese längs einer Kreisbahn verfahrbaren Stütze sowie mit einer zwischen dieser und der Zentralsäule verlaufenden, ein endloses Förderband enthaltenden, vertikal verschwenkbaren Bandbrücke. Die Bandbrücke umfaßt einen über ihre ganze Länge reichenden umfänglich abgeschlossenen Hohlraum, in dem das Förderband untergebracht ist. Sowohl an der Zentralsäule aus auch in der Nähe der Stütze ist je eine mit einer Laufrolle ausgestattete Wippe angebracht, wobei der Abstand der beiden Wippen kleiner ist als die Länge der gegen die Laufrollen der Wippen abgestützten, mittels einer Verstelleinrichtung in Längsrichtung verfahrbaren Bandbrücke. Nachteilig ist hier festzustellen, daß die kreisförmig ausgebildete Fahrbahn einen erheblichen Platzbedarf mit sich bringt, der nicht immer realisiert werden kann.

Aufgabe der Erfindung ist es, die in der DE-B-21 53 359 beschriebene Be- und Entladebrücke dahingehend weiterzubilden, daß bei einfacherem Fahrbahnunterbau und gleichzeitiger Reduzierung von Fahrwerken und Rädern, die Gesamtkonstruktion leichter und vielseitiger anwendbar ausgeführt sein soll. Darüber hinaus soll die Konstruktion unempfindlicher gegenüber Fahrbahnsetzungen, Schienentoleranzen und Belastungen standsicher und verschleißärmer ausgebildet werden.

Diese Aufgabe wird erfindungsgemäß durch die im kennzeichnenden Teil des Anspruchs 1 angegebenen Merkmale gelöst.

Da die Fahrbahn nur aus einer einzigen Schiene besteht, ist die Fahrbahn, nämlich diese einzige Schiene, einfach zu verlegen, braucht wenig Platz in der Breite und erfordert auch geringen Aufwand für die Fundamente, auf denen die Schiene ruht. Bei größeren Setzungen der Schiene kann diese ohne großen Aufwand wieder gerichtet werden. Die Schiene ist auch gleichsam eine horizontale Achse, um die die Fahrwerksstütze schwenkbar ist, wobei sich solche Schwenkbewegungen tatsächlich auf sehr kleine Schwenkwinkel beschränken. Die landseitige Ausbildung der Brücke, daß sie in Außerbetriebsstellung absenkbar ist, führt zur Entlastung des Lagers, was weniger Verschleiß bedeutet.

Die Vorteile des Erfindungsgegenstandes, insbesondere gegenüber der DE-A-21 53 359 sind darin begründet, daß zum einen weniger Fahrwerke und Räder notwendig sind, wodurch die Gesamtkonstruktion leichter wird, und zum anderen ein einfacherer Fahrbahnunterbau gegeben ist. Infolge der nur noch vorhandenen einen Schiene treten auch keine Zwängungen wie beim Stand der Technik mehr auf, so daß hier eine erhebliche Verbesserung der Fahrbahnsetzungen und Schienentoleranzen gegeben ist. Außerdem gewährleistet die schiffsseitige Kugeldrehverbindung zwischen Brücke und Fahrwerksstütze ein leichtes und verschleißarmes Verschwenken gegeneinander.

Diese Kugeldrehverbindung ist mit einem Axiallager ausgebildet, bei dem der Kugelkranz der Kugeldrehverbindung eine große Biegesteifigkeit der Drehverbindung sichert. Die Fahrwerkstütze ist hierbei in der Brücke eingespannt, und zwar unter Anwendung der Kugeldrehverbindung, die Drehungen um die vertikale Achse zuläßt, für alle übrigen Richtungen jedoch eine starre Verbindung darstellt und die Momente in die Brücke überträgt.

Weiterhin wird die landseitige Lagerung der Brücke mit der Überfühung von der Betriebsstellung zur Außerbetriebsstellung und umgekehrt durch Heben und Senken erreicht, wofür im Bereich der ortsfesten Stütze mindestens ein die Brücke von der Betriebsstellung in die Außerbetriebsstellung führender Hydraulikzylinder angeordnet ist. Dieser Hydraulikzylinder kann zwischen der Brücke und dem allseitig drehbaren Lager angeordnet sein.

Schließlich sieht eine Weiterentwicklung der Erfindung vor, daß im Bereich der ortsfesten Stütze eine Auflagekonstruktion vorgesehen ist, auf der die Brücke in ihrer Außerbetriebsstellung abgesetzt wird. Bei Inbetriebnahme des Schiffsbe- und/oder - entladers wird mittels eines Hydraulikzylinders die Brücke angehoben und stützt sich auf das allseitig drehbare Lager ab. Im Außerbetriebszustand, d.h. nur in einer ganz bestimmten Stellung wird die Brücke auf eine Auflagekonstruktion abgesenkt. Das allseitig drehbare Lager ist somit entlastet und es können auch landseitig Kippmomente aufgenommen werden, wodurch die Standsicherheit noch erhöht wird.

Der Erfindungsgegenstand ist anhand einer Zeichnung dargestellt und wird wie folgt beschrieben. Es zeigen:
- Fig. 1 -: Darstellung eines Schiffsbe- und/oder -entladers in verschiedenen Positionen
- Figur 2 -: Prinzipskizze eines linear verfahrbaren Schiffsbeladers mit einer einfachen Fahrbahn
- Figur 3 -: Teildarstellung des stützenseitigen Drehpunktes
- Figur 4 -: Teildarstellung des Führungsbereiches der Brücke.

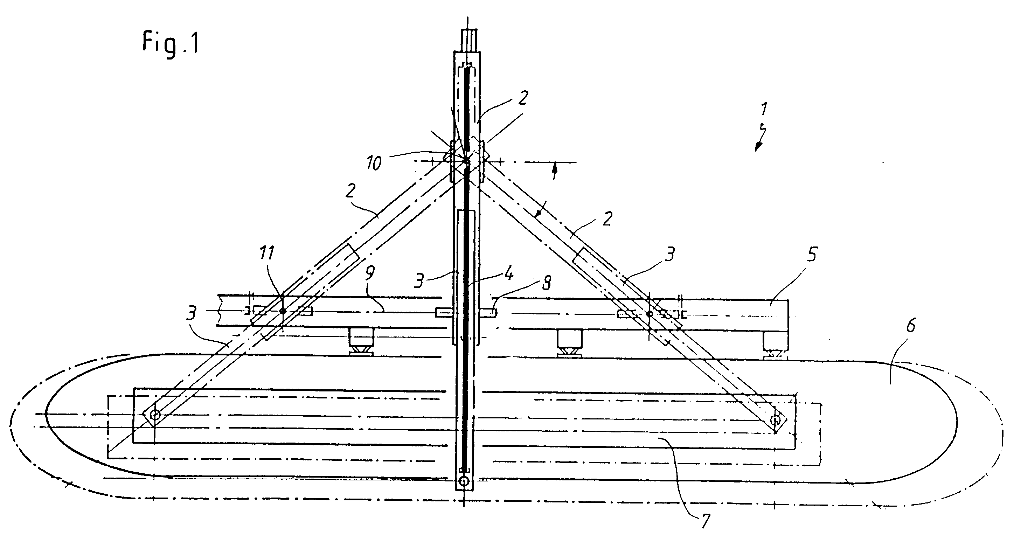

Figur 1 zeigt einen Schiffsbe- und/oder -entlader 1, der eine Brücke 2 beinhaltet, auf welcher ein Ausleger 3 in Längsrichtung der Brücke 2 verfahrbar ist. Eine Fördereinrichtung in Form eines Förderbandes 4 verläuft in Längsrichtung des Auslegers 3 sowie der Brücke 2. Der Schiffsbe- oder -entlader 1 ist auf einem Pier 5 im wesentlichen parallel zu einem Schiff 6 verfahrbar, das in diesem Beispiel mit einem durchgehenden Laderaum 7 ausgerüstet ist. Die Brücke 2 ist schiffsseitig auf einer Fahrwerksstütze 8 abgestützt, deren hier nicht erkennbare Laufräder auf einer einzelnen Fahrschiene 9 abrollen. Die Abbildung läßt aber erkennen, daß sich die Fahrwerksstütze 8 über einen Schienenabschnitt erstreckt und natürlich mit mehreren Laufrädern ausgerüstet ist, um ein in Längsrichtung der Schiene auftretendes Kippmoment aufnehmen zu können.

Landseitig ist die Brücke 2 um die vertikale Achse 10 einer später beschriebenen Stütze schwenkbar und in einem hier nicht weiter dargestellten allseitig drehbaren Lager gehalten.

Die Schiene 9 verläuft parallel zum Schiff 6, wobei bei Bewegung aus der 90°-Position heraus infolge der geradlinig verlaufenden Bewegung der Fahrwerksstütze 8 neben einer Schwenkbewegung der Brücke 2 um die vertikale Achse 10 der ortsfesten Stütze auch eine Schwenkbewegung um die Vertikalachse 11 der Fahrwerksstütze 8 erfolgt.

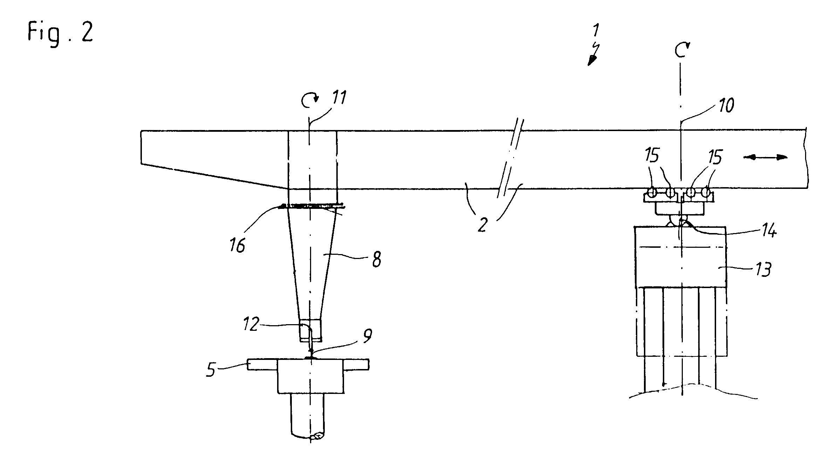

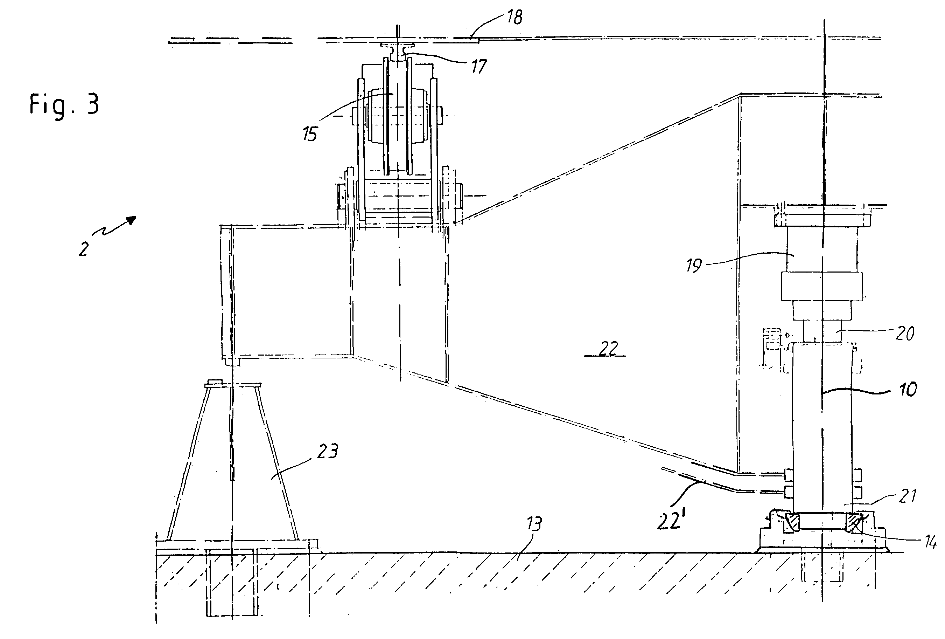

Gleichzeitig wird, wie dies in Figur 2 und 3 näher beschrieben wird, der erforderliche Längenausgleich im Bereich des allseitig drehbaren Lagers realisiert. Der Schiffsbe- und/oder -entlader 1 kann hierbei die dargestellten Positionen einnehmen und durch Verfahren des Auslegers 3 auf der Brücke 2 sämtliche Bereiche des Laderaumes 7 erreichen.

Figur 2 zeigt in vereinfachter Darstellung die Brücke 2 des nicht weiter dargestellten Schiffsbe- und/oder -entladers 1. Erkennbar sind neben der Brücke 2 die schiffsseitig angeordnete Fahrwerksstütze 8, die einzige Schiene 9 auf dem Pier 5 und das vordere Laufrad 12 von mehreren auf der Schiene 9 abrollenden Laufrädern. Zur Verbindung der Brücke 2 mit der Fahrwerksstütze 8 ist eine Kugeldrehverbindung 16 vorgesehen, der die Vertikalachse 11 zugeordnet ist. Figur 2 zeigt weiterhin die landseitige ortsfeste Stütze 13, die in ihrem oberen, der Brücke 2 zugeordneten Bereich ein allseitig drehbares Lager 14 aufnimmt. Oberhalb des allseitig drehbaren Lagers 14 sind Stützrollen 15 vorgesehen, auf denen die Brücke 2 aufliegt und bei Verfahren der Fahrwerksstütze 8 in der einen oder anderen Richtung den Längenausgleich der Brücke 2 realisieren. Die Schwenkbewegung um die Vertikalachse 11 der Fahrwerksstütze 8 wird hierbei über die Kugeldrehverbindung 16 herbeigeführt.

Figur 3 zeigt, etwa in Längsrichtung der Brücke 2 gesehen, eine Teilansicht der landseitigen Lagerung der nicht weiter dargestellten Brücke 2 in der Betriebsstellung, wobei die Last der Brücke 2 von der Brückenunterseite 18 über Führungsschienen 17, die Stützrollen 15, einer kastenartigen Konstruktion 22, einen Hydraulikzylinder 19, dessen Kolben 20 und einen Bolzen 21 auf das allseitig drehbare, d.h. allseitig bewegliche Lager 14, das als Axial-Gelenklager ausgebildet ist, übertragen wird. Die Lagerschale des allseitig drehbaren Lagers 14 ruht auf der ortsfesten Stütze 13. In der dargestellten Betriebsstellung ist der Hydraulikzylinder 19 mit Drucköl beaufschlagt und der Kolben 20 mit einem vorgegebenen Hub ausgefahren. Zur Inbetriebnahme des Schiffsbe- und Entladers ist die Brücke 2 in die dargestellte Position angehoben worden.

Im übrigen ist die Teilansicht, die nur die linke Seite der Gesamtanordnung zeigt, gedanklich zu ergänzen durch eine entsprechende spiegelbildliche Anordnung im wesentlichen aller dargestellten Elemente rechts neben der vertikalen Achse 10.

Im Außerbetriebszustand nimmt die kastenartige Konstruktion 22 die mit der Konstruktionsposition 22' andeutungsweise eingezeichnete Stellung ein. Um zum Außerbetriebszustand zu kommen, wird der Hydraulikzylinder entlastet, sodaß sich die kastenartige Konstruktion 22, auf der die Brücke 2 ruht, absenkt, bis sie auf der ebenfalls dargestellten Auflagekonstruktion 23 zum Aufsitzen gekommen ist. Das allseitig drehbare Lager 14 ist dann entlastet und es können auch landseitig erhebliche Kippmomente aufgenommen werden, die bei schlechten Witterungsverhältnissen durch besonders schwere Stürme auftreten können.

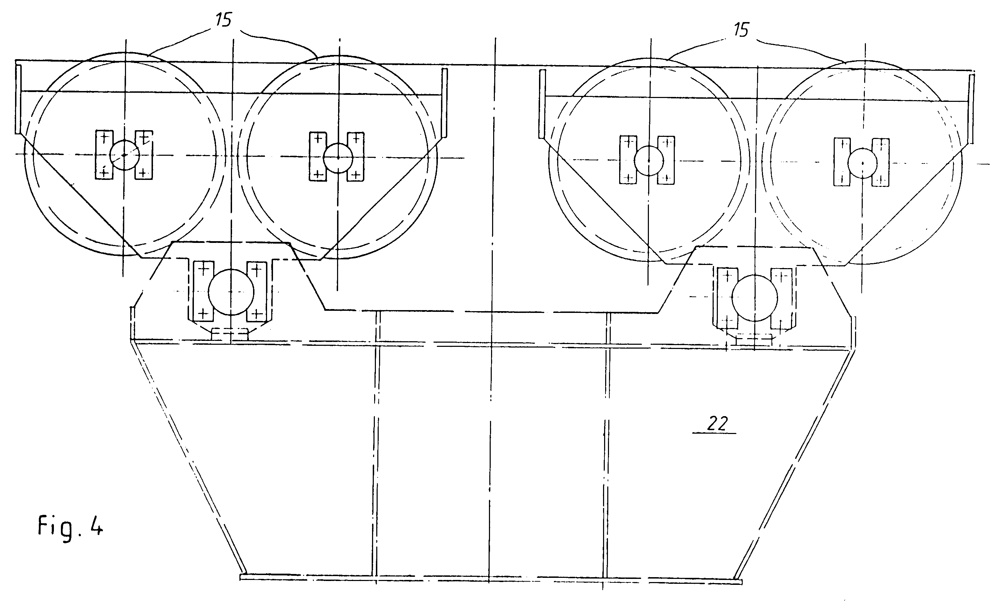

Figur 4 zeigt als Teildarstellung den Führungsbereich der hier nicht weiter dargestellten Brücke. Erkennbar ist die kastenförmige Konstruktion 22 mit den einzelnen Führungsrollen 15.

## Patentansprüche

1. Schiffsbe- und/oder -entlader mit einer, eine Fördereinrichtung (4) beinhaltenden, mit einem verfahrbaren Ausleger (3) zusammenwirkenden Brücke (2), die schiffsseitig durch eine, im wesentlichen parallel zum Schiff (6) auf einer geraden Fahrbahn verfahrbaren Fahrwerksstütze (8) abgestützt ist, wobei die Brücke (2) um eine Vertikalachse (11) der Fahrwerksstütze (8) schwenkbar ist und die landseitig auf einer ortsfesten Stütze (13) relativ zur ortsfesten Stütze (13) in Längsrichtung der Brücke (2) verschiebbar aufsitzt und um eine vertikale Achse (10) der ortsfesten Stütze (13) schwenkbar ist, wobei die Brücke (2) in ihrer Betriebsstellung über ein auf der vertikalen Achse (10) liegendes, allseitig drehbares Lager (14) auf der ortsfesten Stütze (13) aufsitzt, **dadurch gekennzeichnet,** daß die Fahrwerksstütze (8) mittels Laufräder (12) auf einer einzigen die Fahrbahn bildenden Fahrschiene (9) geführt wird, und daß schiffsseitig die Brücke (2) und Fahrwerksstütze (8) über eine Kugeldrehverbindung (16) miteinander verbunden sind, wobei die Brücke (2) landseitig zur Überführung von der Betriebsstellung zur Außerbetriebsstellung und umgekehrt heb- und senkbar ist.

2. Schiffsbe- und/oder -entlader nach Anspruch 1, **dadurch gekennzeichnet,** daß im Bereich der ortsfesten Stütze (13) mindestens ein die Brücke (2) von der Betriebsstellung in die Außerbetriebsstellung führender Hydraulikzylinder (19) angeordnet ist.

3. Schiffsbe- und/oder -entlader nach Anspruch 2, **dadurch gekennzeichnet,** daß der Hydraulikzylinder (19) zwischen der Brücke (2) und dem allseitig drehbaren Lager (14) angeordnet ist.

4. Schiffsbe- und/oder -entlader nach einem der Ansprüche 1 bis 3, **dadurch gekennzeichnet,** daß im Bereich der ortsfesten Stütze (13) eine Auflagekonstruktion (23) vorgesehen ist, auf der die Brücke (2) in ihrer Außerbetriebsstellung absetzbar ist.

## Claims

1. Ship-loading and/or unloading system comprising a gantry (2) fitted with a transport device (4) and operating in conjunction with a travelling boom (3), the said gantry is supported at the end towards the ship by a running-gear column (8) which travels substantially in parallel with the ship (6) on a straight travel path, wherein the gantry (2) can rotate about a vertical axis (11) of the running-gear column (8), and the said gantry sits at a quayside end on a fixed support (13) in such a manner as to be able to be displaced relative to the fixed support (13) in the longitudinal direction of the gantry (2) and can rotate about a vertical axis (10) of the fixed support (13), wherein the gantry (2) in its operating position sits on the fixed support (13) by way of an all-round rotatable bearing (14) mounted on the vertical axis (10), characterised in that the running-gear column (8) is guided by means of running wheels (12) on a single rail (9) forming the travel path and that at the end towards the ship the gantry (2) and the running-gear column (8) are mutually connected by way of a ball-bearing slewing gear (16), wherein the gantry (2) can be raised and lowered at the quayside end to move from the operating position to the inoperative position and reverse.

2. Ship-loading and/or unloading system according to claim 1, characterised in that at least one hydraulic cylinder (19) which guides the gantry (2) from the operating position into the inoperative position is disposed in the region of the fixed support (13).

3. Ship-loading and/or unloading system according to claim 2, characterised in that the hydraulic cylinder (19) is disposed between the gantry (2) and the all-round rotatable bearing (14).

4. Ship-loading and/or unloading system according to any one of claims 1 to 3, characterised in that a supporting construction (23) is provided in the region of the fixed support (13), on which supporting construction the gantry (2) can be lowered in its inoperative position.

## Revendications

1. Dispositif de chargement et/ou de déchargement de navires comportant un pont (2) contenant un dispositif de transport (4), coopérant avec une flèche (3) mobile, lequel pont est soutenu du côté du navire, par un appui à roulement (8) qui peut être déplacé sur un chemin de roulement rectiligne, essentiellement parallèle au navire (6), le pont (2) pouvant être pivoté autour d'un axe vertical (11) de l'appui à roulement (8), et repose, du côté de la terre, sur un appui (13) fixe de manière à pouvoir coulisser par rapport à l'appui (13) fixe suivant la direction longitudinale du pont (2) et peut être pivoté autour d'un axe vertical (10) de l'appui fixe (13), le pont (2) reposant dans sa position de travail sur l'appui fixe (13), par l'intermédiaire d'un palier (14) situé sur l'axe vertical (10) et apte à tourner dans tous les sens, caractérisé en ce que l'appui à roulement (8) est guidé au moyen de roues de roulement (12) sur un rail de roulement (9) unique formant le chemin de roulement et en ce que, du côté du navire, le pont (2) et l'appui à roulement (8) sont reliés l'un à l'autre par l'intermédiaire d'une liaison de rotation à billes (16), tandis que du côté de la terre, le pont (2) peut être relevé et abaissé pour passer de la position de travail à une position hors service et inversement.

2. Dispositif de chargement et/ou de déchargement de navires selon la revendication 1, caractérisé en ce que, dans la région de l'appui fixe (13), est disposé au moins un vérin hydraulique (19) amenant le pont (2) de la position de travail à la position hors service.

3. Dispositif de chargement et/ou de déchargement de navires selon la revendication 2, caractérisé en ce que le cylindre hydraulique (19) est disposé entre le pont (2) et le palier (14) apte à tourner dans tous les sens.

4. Dispositif de chargement et/ou de déchargement de navires selon l'une des revendications 1 à 3, caractérisé en ce que, dans la région de l'appui fixe (13), il est prévu une structure (23) de support sur laquelle le pont (2) peut être descendu dans sa position hors service.
